Europäisches Patentamt

European Patent Office

Office européen des brevets

(19)

(11) Publication number: **0 236 659**
**B1**

## (12) EUROPEAN PATENT SPECIFICATION

(45) Date of publication of the patent specification:
20.12.89

(51) Int. Cl.⁴: **F02D 41/14**, F01N 9/00

(21) Application number: **86830388.4**

(22) Date of filing: **29.12.86**

(54) Device for protecting the catalyst in a catalytic silencer for motor vehicles.

(30) Priority: **14.01.86 IT 6702986**

(43) Date of publication of application:
**16.09.87 Bulletin 87/38**

(45) Publication of the grant of the patent:
**20.12.89 Bulletin 89/51**

(84) Designated Contracting States:
**CH DE ES FR GB LI SE**

(56) References cited:
**DE-A- 2 328 459**
**FR-A- 2 199 802**
**GB-A- 1 372 160**
**GB-A- 1 444 362**
**US-A- 3 696 618**

(73) Proprietor: **FIAT AUTO S.p.A., Corso Giovanni Agnelli 200, I-10135 Torino(IT)**

(72) Inventor: **Di Nunzio, Vittorio, Corso Francia 278, I-10139 Torino(IT)**
Inventor: **Bonardo, Rinaldo, Piazza Delvecchio 11, I-12086 Mondovi Cuneo(IT)**

(74) Representative: **Quinterno, Giuseppe et al, c/o Jacobacci-Casetta & Perani S.p.A. Via Alfieri, 17, I-10121 Torino(IT)**

## Description

The present invention relates to a device for protecting the catalyst of a catalytic silencer for motor vehicles having internal combustion engines, of the kind defined in the preamble of the annexed Claim 1.

A device having the features indicated in the preamble of the appended claim 1 is disclosed in FR-A 2 199 802. This known device for monitoring the performance of the catalyst includes two temperature sensors, mounted upstream and downstream of the catalyst: an alarm is set off when the difference between the temperatures upstream and downstream of the catalyst becomes smaller than a predetermined threshold, thus indicating a reduced efficiency of the catalyst.

Another control system for a catalytic converter is described in US-A 3 696 618. This other system includes a first temperature sensor mounted upstream of the catalyst and a second temperature sensor located into the catalyst. When the temperature difference between the sensors is greatest, the catalytic converter is thought to be working optimally WO-86/04641, which describes a state of the art according to Art. 54(3) EPC, discloses a method for the automatic regeneration of the soot filter of a diesel engine. This method includes detecting the temperatures upstream and downstream of the filter calculating the temperature difference, and comparing said difference with a limit value. When the difference is greater than the limit a signal is generated to stop regenerating.

Because of the ever more severe restrictions imposed by the legislation of various countries with regard to pollutants in exhaust gases from motor vehicle engines, systems for breaking down the exhaust gases with the use of catalytic silencers were introduced some time ago in the United States and more recently even in Europe.

Such silencers are very expensive and this poses a considerable burden on the cost of systems for reducing emissions and on the cost of the vehicles themselves. It is therefore necessary to safeguard the integrity of such silencers, possibly for the entire lifetime of the vehicle or at least for a sufficiently long period of time.

In general, a catalytic silencer comprises a metal casing within which a catalyst is disposed. The latter is generally constituted by a one-piece element of ceramic material formed by numerous cells within which the exhaust gas flows. The cell surfaces over which the gas flows are covered with a thin layer of noble metal, usually platinum, which, at a particular temperature, catalyzes the oxidation of the unburnt gases emitted. This reaction occurs with the evolution of heat which, under the thermal operating conditions of the system, is partly transmitted to the exterior by the metal casing containing the catalyst and for the most part is given up to the exhaust gases which pass through.

Even in the case of oxido-reducing catalysts (TWC) the resulting reaction is exothermic, that is, it occurs with the evolution of heat.

During normal running of an internal combustion engine under all operating conditions, the quantity of unburnt gas emitted to the exhaust is always such that, although they are completely burnt in the catalyst, no dangerous thermal situation for the catalyst is created. Malfunctioning of the engine can occur, however, due essentially to anomalous operation of the ignition system, in which the quantity of unburnt gas exhausted is considerably greater than the quantity during normal running. Under these conditions, if the catalyst is already active, that is, if, in general, it is at a temperature above about 400-500°C, a positive thermal reaction is started which may result in the fusion of the ceramic support in a short time. The following disadvantages may occur as a result:

- reduction in the efficiency of the catalyst, with consequent increase in the emissions of gas and hence breaking of the legal standards; and
- possibility of the progressive fusion of the support with serious reduction in the cross-sections of the passages for the exhaust gas and consequent malfunctioning of the engine; this continues even if the original cause which provoked it has disappeared.

When such situations occur it is necessary to replace the silencer, with not-inconsiderable economic harm.

In order to eliminate or at least limit these disadvantages, protection devices have been proposed for indicating to the user any operating condition of the engine which is dangerous for the catalyst. Such devices are generally of the passive type, that is, they are limited to indicating the dangerous conditions without actuating procedures for automatically protecting the catalyst.

In general, known protection devices include
- an indicator device;
- a temperature sensor for mounting in the silencer downstream of the catalyst in the path of the exhaust gases, and connected to
- control circuit means for activating the indicator device in a predetermined manner when the signals provided by the sensor are indicative of predetermined thermal conditions of the catalyst.

Each time the temperature of the gases detected by the sensor surpasses a predetermined value, for example 900°C, the circuit means activate the indicator device to warn the user that a dangerous situation for the catalyst exists and hence it is time to use less "throttle". If, as a result of the intervention of the user, the dangerous situation ceases, the indicator device is deactivated. However, if the temperature were to surpass a second threshold higher than the preceding one, for example 950°C, the circuit means would activate the indicator device permanently to indicate to the user that the catalyst had suffered irreversible damage.

Various devices of this type are currently available on the market and are known as "slow-down" devices.

Such protection devices used until now do not always ensure a high degree of reliability. Cases are in fact found in which the catalyst has been partially but irreversibly damaged without a temperature having been reached such as to cause the activation of the indicator device. Furthermore, the known devices do not have the required speed of response needed to indicate the creation of a dangerous situation before the catalyst has been irreversibly damaged.

The object of the present invention is to provide a protection device of the previously defined type which has a faster response speed and is thus able to indicate any dangerous situation earlier than known devices, thereby ensuring the integrity and life of the catalyst more effectively.

This object is achieved according to the invention by means of a protection device of the aforesaid type, having the features defined in the characterizing portion of the appended Claim 1.

By virtue of the differential temperature detection between the zones upstream and downstream of the catalyst, the inventor has been able to show that it is possible to detect the creation of dangerous situations for the catalyst considerably sooner.

In accordance with a further characteristic of the invention, for anti-pollution systems in which secondary air from the external environment is

introduced through a supply duct upstream of the catalyst, an electrically-controlled cut-off device is provided which is mounted in this supply duct, and the control circuit means are arranged to activate this cut-off device to cut off the secondary air supply each time the temperature difference detected by the sensors surpasses the first threshold.

The invention will be now further described with reference to the appended drawings, provided purely by way of non-limiting example, in which:

Figure 1 is a schematic view of an internal combustion engine for motor vehicles provided with a catalytic silencer on the exhaust to which a protection device according to the invention is attached,

Figure 2 shows the arrangement and connection of two temperature sensors which, according to the invention, are arranged upstream and downstream of the catalyst,

Figure 3 is a partial block schematic diagram of one embodiment of the device of the invention, and

Figure 4 shows a series of graphs illustrating the possible changes in several magnitudes detected by the device of the invention and of several corresponding signals generated by this device as a function of time t given on the abscissa.

The structure and mode of operation of a protection device according to the invention applied to an anti-pollution system of the so-called open-loop type with an oxidising catalyst and secondary supply of air upstream of the catalyst will now be described. As will become clearer from the following, however, the invention may, in its wider sense, also be applied conveniently to so-called "closed-loop" systems with stoiciometric feedback sensors and trivalent catalysts.

With reference to Figure I, an internal combustion engine for motor vehicles is generally indicated I and has an induction manifold 2 and an exhaust manifold 3.

The fuel supply device (carburettor or injection system) is indicated 4 and the air filter is indicated 5.

A catalytic silencer 6 containing the catalyst 7 is connected to the exhaust manifold 3.

The secondary air inlet system, generally indicated 8, includes a supply duct l0 provided at one end with a filter 9. The filtered air is fed through the branches of the exhaust manifold 3 by a device of the pulse-air type or an air pump ll.

In operation, the gas leaving the exhaust valves, together with the secondary air introduced by the system 8, reaches the catalytic silencer 6 where the unburnt gases react with the oxygen present, and then pass through the exhaust l2 to the atmosphere.

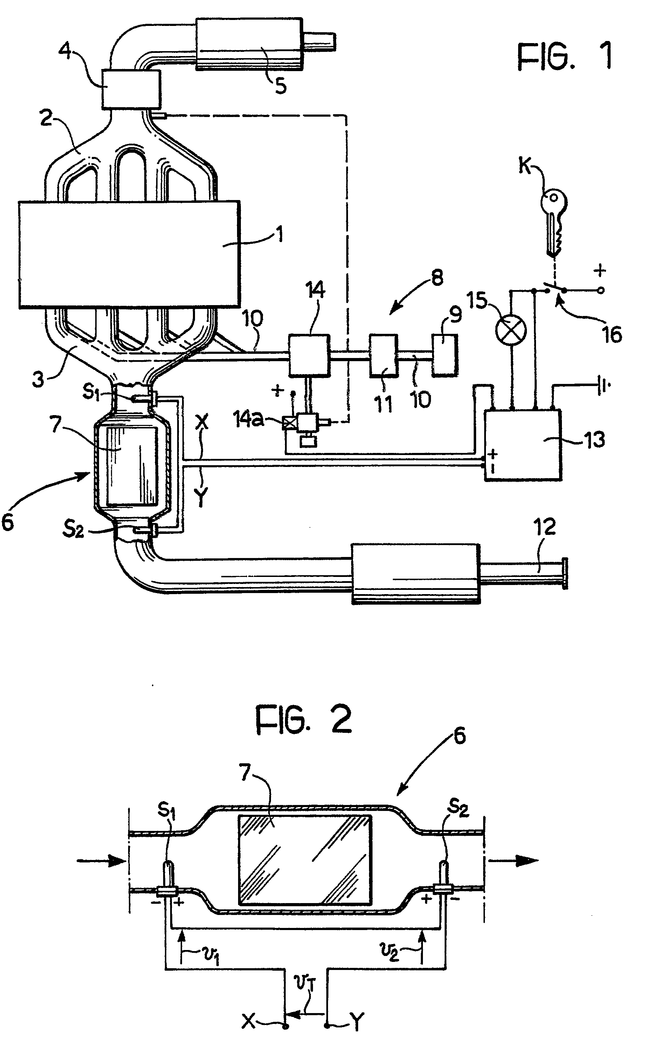

The protection device according to the invention includes two temperature sensors Sl and S2 mounted upstream and downstream of the catalyst 6, respectively, in the path of the exhaust gas. These sensors are constituted, for example, by thermocouples connected in series, in opposition, as shown in Figure 2, so that, in operation, an electromotive force $v_T = v_2 - v_1$ proportional to the difference betwcen the temperatures measured upstream and downstream of the catalyst is generated across the terminals X and Y.

The terminals X and Y are connected to the corresponding inputs of an electronic control unit, indicated l3 in Figure I. This unit is also connected to an excitation winding l4a of a cut-off solenoid valve l4 located in the supply duct l0 for the secondary air.

The unit l3 is also connected to an optical signalling device l5 constituted, for example, by a lamp physically mounted, for example, on the dashboard of the motor vehicle.

A switch l6 is operable by means of the ignition and starter key K of the motor vehicle to connect the lamp l5 and the electronic unit l3 to the positive pole of the battery of the vehicle.

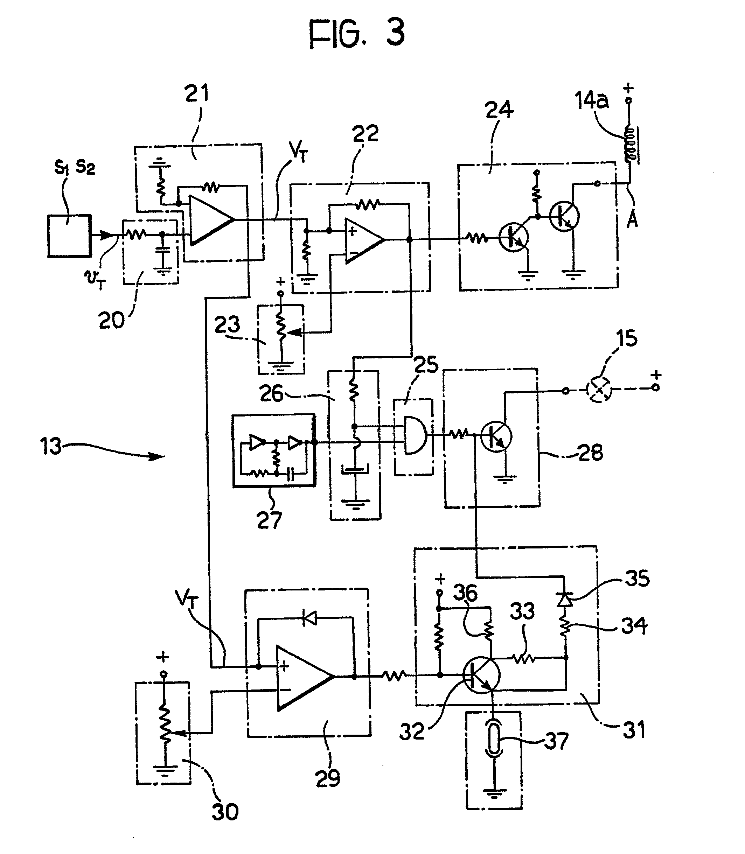

Figure 3 shows, by way of example, an embodiment of the electronic unit l3. In this embodiment, the temperature differential signal $v_T$ between the terminals X and Y connected to the two temperature sensors is supplied to a filter circuit 20 intended to eliminate any induced static interference from the signal. The filtered signal is supplied to a differential amplifier 2l and the amplified signal $V_T$ is then supplied to a comparator circuit 22 which compares it with a reference signal generated, for example, by means of a potentiometer 23. The comparator 22 is of the hysteresis type and is arranged so that its output switches to high level when the signal from the sensors Sl, S2 is indicative of a temperature difference of, for example, l80C° between the zones downstream and upstream of the catalyst. The hysteresis of the comparator 22 may correspond for example, to a range of about 30C° so that the output of this comparator returns to a low level when the signal provided by the sensors Sl and S2 indicates that the temperature difference has returned to below l50C°.

The output of the comparator 22 is connected to the input of the pilot circuit 24 of the winding l4a for energising the solenoid valve l4 which controls the introduction of secondary air into the exhaust manifold 3 of the engine.

The output of the comparator 22 is also connected to a first input of an AND circuit 25 through a delay circuit 26, for example of the RC type. This circuit is arranged to introduce a delay, for example of the order of 5 to 8 seconds.

The other input of the AND circuit 25 is connected to a low-frequency oscillator 27 for generating a pulsating signal at a frequency, for example, of 2 Hz. The AND circuit 25 is connected to the input of a pilot circuit 28 for the lamp l5. This circuit may consist simply of a transistor and the lamp l5 may be connected between the collector of this transistor and the positive pole of the voltage supply.

The signal $V_T$ output by the amplifier 2l is also supplied to the input of a second comparator circuit 29 connected to an adjustable reference voltage source 30 also formed, for example, by a potentiometer. The reference voltage associated with the comparator 29 corresponds, for example, to a temperature difference of 250C° between the zones downstream and upstream of the catalyst 7.

The output of the comparator 29 is connected to the input of a power circuit 3l which, in the example illustrated, comprises a transistor 32 the collector of which is connected to the lamp pilot circuit 28 through two resistors 33 and 34 and a diode 35. A resistor 36 connects the collector of the transistor 32 to the positive pole of the voltage supply. Finally, a fuse element 37 is interposed between the emitter of the transistor 32 and earth.

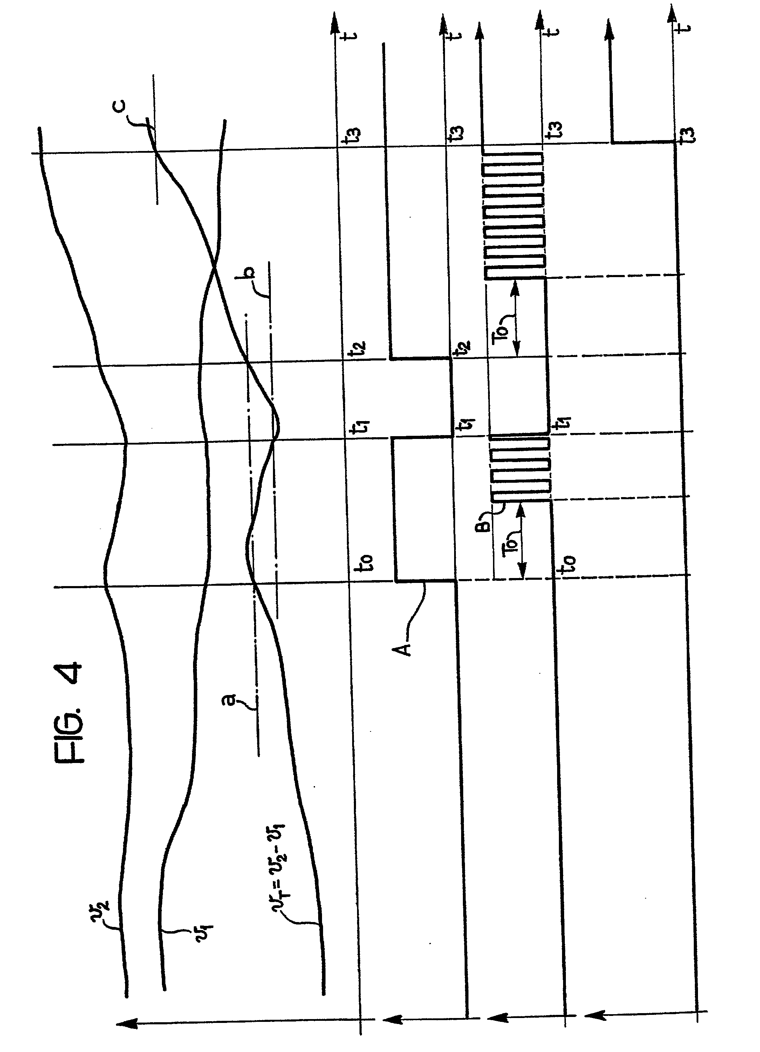

The operation of the device described above will now be explained with reference, in addition, to the graphs of Figure 4. In the upper part of this Figure there are given by way of example, as a function of the time t, graphs of the electromotive forces vl and v2 generated by the sensors Sl and S2 of the device (see also Figure 2). The graph corresponding to the difference signal equal to the difference between v2 and vl is indicated $v_T$.

First and second levels corresponding to the thresholds of the comparator 22 are indicated a and b, while a third level corresponding to the threshold of the comparator circuit 29 is indicated c.

In operation, when the difference signal $v_T$ surpasses the level a and hence $V_T$ surpasses the upper threshold of the comparator 22, as shown at the instant t = t₀, the outputs of the comparator 22 and the pilot circuit 24 change to the high level, as indicated by the waveform A in Figure 4, and the solenoid valve l4 is de-energised, cutting off the duct l0 and stopping the introduction of secondary air into the exhaust manifold.

After a delay $T_0$ of 5-8 seconds, the AND gate 25 couples the oscillator 27 to the pilot circuit 28 for the lamp l5. The lamp is thus switched on and off intermittently, as indicated by the waveform B in Figure 4. The user is thus warned of the dangerous situation which may result in damage to the catalyst if the speed is not moderated.

Once the contribution of the secondary air has stopped, the oxidation of the unburnt gases is reduced and if, as a result of the signal provided by the lamp l5, the user has reduced the speed, the temperature difference tends to decrease until $v_T$ falls below the level b, for example at the instant t₁. At this instant, the output of the comparator 22 changes again to the low level, closing the AND gate 24 and thus stopping the intermittent signal emitted by the lamp l5. Furthermore, the switching of the output of the comparator 22 causes the reintroduction of secondary air into the exhaust manifold. Under these conditions, operation may continue with periodic pulsing signals from the lamp, indicating to the user that the catalyst is still in danger and it is therefore appropriate to exhibit a certain prudence in driving.

However, if the engine malfunctions, for example, with a periodic or repeated omission of sparking in one or more cylinders starting, for example, from the instant t₂, the operation of the system may evolve differently. At the instant t₂, the first threshold is surpassed and the introduction of secondary air into the exhaust manifold is again stopped. Since a malfunction of the engine is occurring, the exhaust gas contains unburnt gases and air to an extent sufficient to cause an energetic reaction in the catalytic silencer whereby, even in the absence of secondary air, the temperature difference detected by the sensors Sl and S2 continues to increase.

After a period of time of duration $T_0$ following the instant t₂, the lamp l5 starts to switch on and off repeatedly. If the user does not moderate speed, the temperature difference may continue to increase until it passes beyond the third threshold c at the instant t₃. In this case, the output of the comparator 29 changes to the high level, as indicated by the waveform C in Figure 4, and the current circulating in the collector-emitter path of the transistor 32 breaks the fuse 37. The lamp l5 is supplied permanently since its control transistor 28 is kept conductive through the resistors 36, 33, 34 and the diode 35, indicating to the user that irreversible damage has occurred to the catalyst.

The permanent signal from the lamp l5 is renewed automatically each time the electrical supply of the electronic unit l3 is restored.

The user must then replace the catalyst and an expert technician must then replace the fuse 37, thus "resetting" the electronic unit l3.

The values associated with the threshold levels a, b, c given above are purely indicative and clearly must be pre-defined according to the type of engine and the characteristics of the anti-pollution control system adopted, and also in dependence on the characteristics of the catalytic silencer and the temperature sensors used.

In the case of anti-pollution control systems of the closed-loop type, the maximum temperature difference between the zones downstream and upstream of the catalyst is very low, typically less than l50C°, during normal operating conditions. The protection device according to the invention may be used to advantage even with those systems which do not provide for the introduction of secondary air into the exhaust manifold. For application to these systems the device according to the invention will have a simplified structure, it not being necessary to provide the part for cutting off and restoring the introduction of secondary air.

However, a device according to the invention made for use in connection with systems in which there is introduction of secondary air may also be used easily in connection with systems in which there is no provision for the introduction of such air, the threshold levels simply being recalibrated and the part for the cut off and readmission of the secondary air being left inoperative.

**Claims**

1. Device for protecting the catalyst (7) of a catalytic silencer (6) for motor vehicles having internal combustion engines, comprising an indicator device (15), a temperature sensor ($S_2$) mounted in the silencer (6) downstream of the catalyst (7) in the path of the exhaust gas, and connected to control circuit means (13) for activating the indicator device (15) in a predetermined manner when the signals provided by the sensor ($S_2$) are indicative of predetermined thermal conditions in the catalyst (7), and a further temperature sensor ($S_1$) located upstream of the catalyst (7) and also connected to the control circuit means (13); the circuit means (13) being arranged to activate the indicator device (15) in dependence on the difference between the temperatures detected by the sensors ($S_2$, $S_1$), characterized in that the said control circuit means (13) are arranged to activate the said indicator device (15) to emit a first signal when the absolute difference between the temperatures detected by the sensors ($S_1$, $S_2$) is greater than a first predetermined threshold level (a).

2. Device according to Claim 1, characterized in that the control circuit means (13) are arranged to activate the indicator device (12) after a predetermined delay ($T_0$) following the instant at which the difference between the temperatures detected by the sensors ($S_2$, $S_1$) surpasses the first threshold (a).

3. Device according to Claim 1 or 2, characterized in that the control circuit means (13) are arranged to deactivate the indicator device when the difference between the temperatures detected by the sensors ($S_2$, $S_1$) falls below a second predetermined threshold (b) below or the same as the first threshold (a).

4. Device according to any one of Claims 1 to 3, characterised in that the control circuit means (13) are arranged to cause the indicator device (15) to emit a second signal when the difference between the temperatures detected by the sensors ($S_2$, $S_1$) surpasses a third threshold (c) above the first threshold (a).

5. Device according to Claim 4, characterised in that the circuit control means (13) include non-volatile memory means (37) for causing the automatic re-emission of the second signal each time the electrical supply of the control circuit means (13) is restored.

6. Device according to any of the preceding claims, particularly for anti-pollution systems in which secondary air from the external environment is introduced through a supply duct (15) upstream of the catalyst (7), characterised in that it further includes an electrically-controlled cut-off device (14) in the intake duct (10), and in that the control circuit means (13) are arranged to activate the cut-off device (14) to cut off the supply of secondary air each time the difference between the temperatures detected by the sensors ($S_2$, $S_1$) surpasses the first threshold (a).

7. Device according to Claim 6, characterised in that the control circuit means (13) are arranged to deactivate the cut-off device (14) when the difference between the temperatures detected by the sensors ($S_2$, $S_1$) falls below the second threshold (b).

8. Device according to any one of the preceding claims, characterised in that the indicator device (15) is arranged to emit a first signal of intermittent type and a second signal of continuous type.

9. Device according to Claim 8, characterised in that the indicator device (15) is of optical or acoustic type.

10. Device according to any one of the preceding claims, characterised in that the temperature sensors ($S_2$, $S_1$) are thermocouple sensors.

11. Device according to Claim 10, characterised in that the thermocouple sensors ($S_2$, $S_1$) are connected together in opposition.

12. Device according to all the preceding claims, characterised in that the control circuit means (13) comprise
a first threshold comparator (22, 23) of hysteresis type, connected to the temperature sensors ($S_1$, $S_2$) and defining first and second thresholds (a, b),
an AND circuit (25),
a delay circuit (26) having its input connected to the output of the first comparator (22) and its output connected to an input of the AND circuit (25),
a low-frequency oscillator (27) connected to the other input of the AND circuit (25),
a driving circuit (28) for the indicator device (15) connected to the output of the AND circuit (25),
a second threshold comparator (29, 30) having its input connected to the temperature sensors ($S_1$, $S_2$) and defining the third threshold (c), and having its output connected to the input of the driving circuit (28) so as to cause the permanent activation of the indicator device (15) when the difference between the temperatures detected by the sensors ($S_1$, $S_2$) surpasses the third threshold (c).

13. Device according to Claims 5 and 12, characterised in that the second threshold comparator (29, 30) is connected to the driving circuit (28) through a circuit (31) of the control (28); the control circuit (31) including a fuse (37) which is intended to break and cause the permanent activation of the indicator device (15) immediately upon switching of the output of the second threshold comparator (29, 30).

**Patentansprüche**

1. Vorrichtung zum Schutz des Katalysators (7) eines katalytischen Schalldämpfers (6) für Kraftfahrzeuge mit Brennkraftmaschinen mit folgenden Teilen: einer Anzeigevorrichtung (15), einem in dem Schalldämpfer (6) stromabwärts des Katalysators (7) in dem Weg der Auspuffgase montierten Temperatursensor ($S_2$), der verbunden ist mit einer Steuerschaltung (13), die die Anzeigevorrichtung (15) in einer vorbestimmten Weise aktiviert, wenn die von dem Temperatursensor (S2) gelieferten Signale vorbestimmte thermische Bedingungen in dem Katalysator (7) anzeigen, und einem weiteren Temperatursensor (S1), der stromaufwärts des Katalysators (7) angeordnet und ebenfalls mit den Steuerschaltung (13) verbunden ist, wobei die Steuerschaltung (13) so angeordnet ist, daß sie die Anzeigevorrichtung (15) in Abhängigkeit von der Differenz zwischen der von den Temperatursensoren (S2, S1) ermittelten Temperaturen aktiviert, dadurch gekennzeichnet, daß die Steuerschaltung (13) so ausgebildet ist, daß sie die Anzeigevorrichtung (15) zur Aussendung eines ersten Signals aktiviert, wenn die absolute Differenz zwischen den von den Temperatursensoren (S2, S1) ermittelten Temperaturen einen vorbestimmten ersten Schwellwertpegel (a) überschreitet.

2. Vorrichtung nach Anspruch 1, dadurch gekennzeichnet, daß die Steuerschaltung (13) so ausgebildet ist, daß sie die Anzeigevorrichtung (15) nach einer vorbestimmten Verzögerungszeit (T0) aktiviert, die auf den Zeitpunkt folgt, in dem die Differenz zwischen den von den beiden Temperatursensoren (S2, S1) ermittelten Temperaturen den ersten Schwellwert (a) überschreitet.

3. Vorrichtung nach Anspruch 1 oder 2, dadurch gekennzeichnet, daß die Steuerschaltung (13) so ausgebildet ist, daß sie die Anzeigevorrichtung (15) deaktiviert, wenn die Differenz zwischen den von den Temperatursensoren (S2, S1) ermittelten Temperaturen unter einen zweiten vorbestimmten Schwellwert (b) fällt, der kleiner als oder ebenso groß wie erste Schwellwert (a) ist.

4. Vorrichtung nach einem der Ansprüche 1 bis 3, dadurch gekennzeichnet, daß die Steuerschaltung (13) so ausgebildet ist, daß sie die Anzeigevorrichtung (15) zur Aussendung eines zweiten Signals veranlaßt, wenn die Differenz zwischen den von den Temperatursensoren (S2, S1) ermittelten Temperaturen einen dritten Schwellwert (c) überschreitet, der über dem ersten Schwellwert (a) liegt.

5. Vorrichtung nach Anspruch 4, dadurch gekennzeichnet, daß die Steuerschaltung (13) nichtflüchtige Speichermittel (37) enthält, die jedesmal die automatische Wiederaussendung des zweiten Signals veranlassen, wenn die elektrische Stromversorgung der Steuerschaltung (133 wieder wirksam wird.

6. Vorrichtung nach einem der Ansprüche, insbesondere für Systeme zur Verhinderung von Luftverschmutzung, bei denen Sekundärluft aus der äußeren Umgebung über eine Zuführungsleitung (15) stromaufwärts des Katalysators (7) eingeleitet wird, dadurch gekennzeichnet, daß in der Einlaßleitung (10) eine elektrisch gesteuerte Sperrvorrichtung (14) angeordnet ist und daß die Steuerschaltung (13) so ausgebildet ist, daß sie diese Sperrvorrichtung (14) in der Weise aktiviert, daß diese jedesmal die Zufuhr von Sekundärluft sperrt, wenn die Differenz zwischen den von den Temperatursensoren (S2, S1) ermittelten Temperaturen den ersten Schwellwert (a) überschreitet.

7. Vorrichtung nach Anspruch 6, dadurch gekennzeichnet, daß die Steuerschaltung (13) so ausgebildet ist, daß sie die Sperrvorrichtung (14) deaktiviert, wenn die Differenz zwischen den von den Temperatursensoren (S2, S1) ermittelten Temperaturen unter den zweiten Schwellwert (b) fällt.

8. Vorrichtung nach einem der vorhergehenden Ansprüche, dadurch gekennzeichnet, daß die Anzeigevorrichtung (15) so ausgebildet ist, daß sie ein erstes Signal als intermittierendes und ein zweites Signal als kontinuierliches Signal aussendet.

9. Vorrichtung nach Anspruch 8, dadurch gekennzeichnet, daß die Anzeigevorrichtung (15) eine optische oder eine akustische Anzeigevorrichtung ist.

10. Vorrichtung nach einem der vorhergehenden Ansprüche, dadurch gekennzeichnet, daß die Temperatursensoren (S2, S1) Thermoelemente sind.

11. Vorrichtung nach Anspruch 10, dadurch gekennzeichnet, daß die Thermoelemente (S2, S1) gegenläufig miteinander verbunden sind.

12. Vorrichtung nach allen vorhergehenden Ansprüchen, dadurch gekennzeichnet, daß die Steuerschaltung (13) folgende Teile enthält: einen ersten Schwellwertkomparator (22, 23) mit Hysterese, der mit den Temperatursensoren (S1, S2) verbunden ist und einen ersten und einen zweiten Schwellwert (a, b) definiert, ein UND-Glied (25), eine Verzögerungsschaltung (26), deren Eingang mit dem Ausgang des ersten Schwellwertkomparators (22) und deren Ausgang mit dem Eingang des UND-Glieds (25) verbunden ist, einen Niederfrequenzoszillator (27), der mit dem anderen Eingang des UND-Glieds (25) verbunden ist, eine mit dem Ausgang des UND-Glieds (25) verbundene Treiberschaltung (28) für die Anzeigevorrichtung (15), und einen einen dritten Schwellwert (c) definierenden Schwellwertkomparator (29, 30), dessen Eingang mit den Temperatursensoren (S1, S2) verbunden ist und dessen Ausgang so mit dem Eingang der Treiberschaltung (28) verbunden ist, daß er die permanente Aktivierung der Anzeigevorrichtung (15) veranlaßt, wenn Differenz zwischen den von den Temperatursensoren (S2, S1) ermittelten Temperaturen den dritten Schwellwert (c) überschreitet.

13. Vorrichtung nach Anspruch 5 und 12, dadurch gekennzeichnet, daß der zweite Schwellwertkomparator (29, 30) über eine Schaltung (31) der Steuerung (28) mit der Treiberschaltung (28) verbunden ist und daß die Steuerschaltung (31) eine Sicherung (37) enthält, die unmittelbar nach dem Schalten des Ausgangssignals des zweiten Schwellwertkomparators (29, 30) auftrennt und die permanente Aktivierung der Anzeigevorrichtung (15) bewirkt.

**Revendications**

1. Dispositif de protection du catalyseur (7) d'un pot catalytique (6) pour véhicule à moteur à combustion interne, comprenant un dispositif indicateur (15), un capteur (S2) de température monté dans le pot catalytique (6) en aval du catalyseur (7) sur le trajet des gaz d'échappement, et connecté à un circuit de commande (13) destiné à activer le dispositif indicateur (15) de manière prédéterminée lorsque les signaux transmis par le capteur (S2) sont représentatifs de conditions thermiques prédéterminées régnant dans le catalyseur (7), et un capteur supplémentaire (S1) de température placé en amont du catalyseur (7) et connecté aussi au circuit de commande (13), le circuit (13) étant destiné à activer le dispositif indicateur (15) d'après la différence entre les températures détectées par les capteurs (S2, S1), caractérisé en ce que le circuit de commande (13) est destiné à activer le dispositif indicateur (15) afin qu'il émette un premier signal lorsque la différence absolue entre les températures détectées par les capteurs (S1, S2) est supérieure à un premier niveau prédéterminé de seuil (a).

2. Dispositif selon la revendication 1, caractérisé en ce que le circuit de commande (13) est destiné à activer le dispositif indicateur (12) après un retard prédéterminé (T0) suivant le moment auquel la différence entre les températures détectées par les capteurs (S2, S1) dépasse le premier seuil (a).

3. Dispositif selon la revendication 1 ou 2, caractérisé en ce que le circuit de commande (13) est disposé de manière qu'il désactive le dispositif indicateur lorsque la différence entre les températures détectées par les capteurs (S2, S1) tombe au-dessous d'un second seul prédéterminé (b) qui est inférieur ou égal au premier seuil (a).

4. Dispositif selon l'une quelconque des revendications 1 à 3, caractérisé en ce que le circuit de commande (13) est destiné à provoquer l'émission, par le dispositif indicateur (15), d'un second signal lorsque la différence entre les températures détectées par les capteurs (S2, S1) dépasse un troisième seuil (c) qui est supérieur au premier seuil (a).

5. Dispositif selon la revendication 4, caractérisé en ce que le circuit de commande (13) comporte une mémoire permanente (37) destinée à provoquer la réémission automatique du second signal chaque fois que l'alimentation électrique du circuit de commande (13) est remise en fonctionnement.

6. Dispositif selon l'une quelconque des revendications précédentes, notamment destiné à des systèmes antipollution dans lesquels de l'air secondaire provenant de l'atmosphère externe est introduit par un conduit d'alimentation (15) en amont du catalyseur (7), caractérisé en ce qu'il comporte en outre un dispositif (14) de coupure, commandé électriquement et placé dans le conduit d'admission (10), et en ce que le circuit de commande (13) est destiné à activer le dispositif de coupure (14) afin qu'il interrompe la transmission d'air secondaire chaque fois que la différence entre les températures détectées par les capteurs (S2, S1) dépasse le premier seuil (a).

7. Dispositif selon la revendication 6, caractérisé en ce que le circuit de commande (13) destiné à désactiver le dispositif de coupure (14) lorsque la différence entre les températures détectées par les capteurs (S2, S1) tombe au-dessous-du second seuil (b).

8. Dispositif selon l'une quelconque des revendications précédentes, caractérisé en ce que le dispositif indicateur (15) est destiné à émettre un premier signal de type intermittent et un second signal de type continu.

9. Dispositif selon la revendication 8, caractérisé en ce que le dispositif indicateur (15) est de type optique ou acoustique.

10. Dispositif selon l'une quelconque des revendications précédentes, caractérisé en ce que les capteurs de température (S2, S1) sont des capteurs à thermocouple.

11. Dispositif selon la revendication 10, caractérisé en ce que les capteurs à thermocouple (S2, S1) sont connectés en opposition.

12. Dispositif selon toutes les revendications précédentes, caractérisé en ce que le circuit de commande (13) comporte un premier comparateur (22, 23) à seuil du type à hystérésis, connecté aux capteurs de température (S1, S2) et formant un premier et un second seuil (a, b), un circuit ET (25), un circuit à retard (26) dont l'entrée est connectée à la sortie du premier comparateur (22) et dont la sortie est connectée à une entrée du circuit ET (25), un oscillateur (27) à basse fréquence connecté à l'autre entrée du circuit ET (25), un circuit (28) de pilotage du dispositif indicateur (15), connecté à la sortie du circuit ET (25), et un second comparateur à seuil (29, 30) dont l'entrée est connectée aux capteurs de température (S1, S2) et qui forme le troisième seuil (c), ce comparateur ayant sa sortie connectée à l'entrée du circuit de pilotage (28) afin qu'il provoque l'activation permanente du dispositif indicateur (15) lorsque la différence entre les températures détectées par les capteurs (S1, S2) dépasse le troisième seuil (c).

13. Dispositif selon les revendications 5 et 12, caractérisé en ce que le second comparateur à seuil (29, 30) est connecté au circuit de pilotage (28) par un circuit (31) de commande (28), le circuit de commande (31) comprenant un fusible (37) destiné à être coupé et à provoquer l'activation permanente du dispositif indicateur (15) immédiatement après la commutation du signal de sortie du second comparateur à seuil (29, 30).

FIG. 1

FIG. 2

# FIG. 3

FIG. 4